# EUROPÄISCHE PATENTANMELDUNG

(11) **EP 1 884 606 A1**
(43) Veröffentlichungstag der Anmeldung: **06.02.2008**
(21) Anmeldenummer: 06016226.0
(22) Anmeldetag: 03.08.2006
(51) Int. Cl.: E04F 13/08

(54) **Verfahren zur Verankerung von Gewindehülsen für Befestigungsschrauben**

(71) Anmelder: FibreCem Holding AG, 8867 Niederurnen (CH)
(72) Erfinder: Trachsler, Martin, 8867 Niederurnen (CH)
(74) Vertreter: Werner, Georges

(57) **Zusammenfassung**

Die Verankerung von Gewindehülsen (1) erfolgt durch Bohren eines hinterschnittenen Sackloches (3,3') in eine dünnwandige Platte (2) und Einsetzen eines spreizbaren Hinterschnittankers (5), wobei nach dem Bohren Klebstoff (4) in das Bohrloch (3) eingefüllt wird, gefolgt vom Einsetzen des spreizbaren Ankers (5), welcher durch Eindrehen einer unten geschlossenen Gewindehülse (1) bleibend aufgespreizt wird. Die derart eingedrehte Gewindehülse (1) wird vom Anker(5) gehalten, welcher im Bohrloch (3) zusätzlich durch den Klebstoff (4) in der Platte (2) gehalten wird. Die derart verankerten Gewindehülsen (1) dienen der Aufnahme von Befestigungsschrauben.

## Beschreibung

Die vorliegende Erfindung betrifft ein Verfahren zur Verankerung von Gewindehülsen für Befestigungsschrauben in dünnwandigen Platten, insbesondere Faserzementplatten, wobei an der Verankerungsstelle ein Sackloch mit Hinterschnitt gebohrt, in das hinterschnittene Bohrloch ein spreizbarer Hinterschnittanker mit Innengewinde eingesetzt und dieser gespreizt und damit im Bohrloch verankert wird, sowie die Verwendung derartiger Verankerungen für die nicht sichtbare Befestigung von Plattenhaltern an Fassadenplatten.

Die Verankerung von Hinterschnittankern in Platten gemäss vorstehendem Verfahren ist bekannt, wobei die bleibende Aufspreizung des Ankers im hinterschnittenen Sackloch durch Eindrehen der Befestigungsschraube erfolgt. Diese Lösung hat sich insbesondere bei Platten ab einervorbestimmten Dicke gut bewährt. Aufgabe der vorliegenden Erfindung war es, auch bei dünnwandigen Platten eine zuverlässige Verankerung der Befestigungsschrauben, welche in der Regel vom aufspreizbaren Anker gebildet werden, zu erreichen, d.h. eine verbesserte Auszugskraft (welche auch die Anzahl der erforderlichen Verankerungspunkte bestimmt) zu erreichen.

Diese Aufgabe wird bei einem Verfahren der eingangs definierten Art erfindungsgemäss durch die Merkmale gemäss dem kennzeichnenden Teil von Anspruch 1 gelöst.

Dank dem die bisher auch nach Einsetzen des Ankers unvermeidlichen Leerräume zwischen Bohrlochwand und Anker ausfüllenden Klebstoff wird die Verankerung der Gewindehülse optimiert, da damit keine Ansatzpunkte für unkontrolliert wirkende Kräfte mehr bestehen, was insbesondere bei der Verankerung von Gewindehülsen in dünnwandigen Platten, insbesondere Faserzementplatten, von grosser Bedeutung ist. Ebenfalls Gegenstand der Erfindung ist die Verwendung von erfindungsgemäss verankerten Gewindehülsen für nicht sichtbare Befestigung von Plattenhaltern auf den Rückseiten von Fassadenplatten.

Die Erfindung wird nachstehend anhand eines in der Zeichnung dargestellten Ausführungsbeispiels noch etwas näher erläutert. Es zeigt:
Fig. 1 schematisch einen Vertikalschnitt durch die erfindungsgemässe Verankerung einer Gewindehülse für eine Befestigungsschraube in einer Faserzementplatte;
Fig. 2 einen bei einer Verankerung nach Fig. 1 zu verwendenden Hinterschnittanker;
Fig. 3 schematisch die Geometrie eines Bohrloches zur Aufnahme des Ankers nach Fig. 2, und
Fig. 4 ebenfalls rein schematisch die Verwendung von Verankerungen nach Fig. 1 für die nicht sichtbare Befestigung von Plattenhaltern an Fassadenplatten.

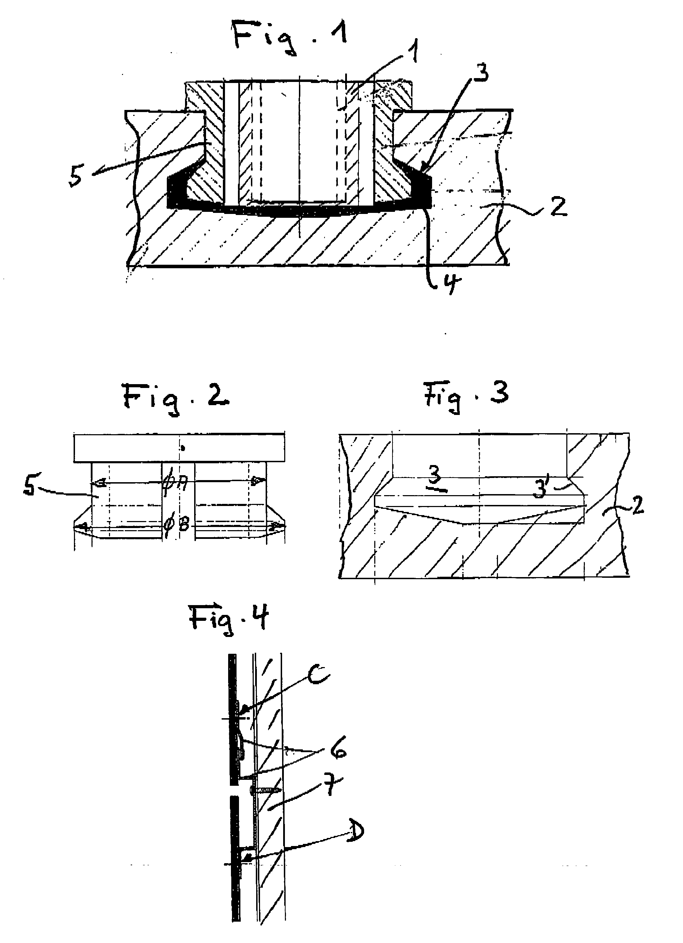

Figuren 1 - 3 der Zeichnung zeigen die Verankerung einer Gewindehülse 1 in einer dünnwandigen Faserzementplatte 2.

Zur Herstellung der Verankerung wird zuerst ein Sackloch 3 mit Hinterschnitt 3' auf der Rückseite der Platte 2 gebohrt (s. Fig. 3). Solche Hinterschnittbohrungen 3 werden an sämtlichen Punkten der Platte erstellt, wo Gewindehülsen für Befestigungsschrauben vorgesehen sind.

Nach dem Bohren des Sackloches 3 wird Klebstoff 4 in den unteren Teil des Sackloches 3 eingefüllt und unmittelbar danach ein Hinterschnittanker 5 (Details Fig. 2) eingeführt. Dieser Anker 5 ist geschlitzt (z.B. zwei oder vier Schlitze 5'), sodass dessen Fussdurchmesser ∅B zum Einführen auf den Durchmesser ∅A zusammengedrückt werden kann (∅A entspricht dem kleinsten Durchmesser des Sackloches 3).

Nach dem Einführen des Ankers 5 wird eine unten geschlossene Gewindehülse 1 in das Innengewinde des Ankers 5 geschraubt, um diesen zu spreizen. Dabei verteilt sich der Klebstoff 4 in den Leerräumen zwischen Bohrungswand und Anker 5 und hält diesen und damit die Gewindehülse 1 nach Erhärtung unverrückbar in der Platte 2 fest. Dank der Ausfüllung durch die Klebstoffmasse verteilen sich auftretende Kräfte gleichmässig auf die gesamte Verankerung, was optimale Auszugskräfte gewährleistet (was bisher nur durch theoretisch absolut aufeinander abgestimmte Geometrien von Bohrloch und Anker möglich wäre, in der Praxis jedoch besonders bei dünnwandigen Faserzementplatten nicht realisierbar ist).

Die derart verankerte Gewindehülse 1 (mit Innen- und Aussengewinde) ist nun bereit eine passende Befestigungsschraube (nicht dargestellt) aufzunehmen.

Figur 4 zeigt den Einsatz der beschriebenen Verankerungen (z.B. an den Stellen C und D) zur nicht sichtbaren Befestigung von Plattenhaltern 6 (welche ihrerseits mit einer Unterkonstruktion 7 zusammenwirken).

## Patentansprüche

1. Verfahren zur Verankerung von Gewindehülsen für Befestigungsschrauben in dünnwandigen Platten, insbesondere Faserzementplatten, wobei an der Verankerungsstelle ein Sackloch mit Hinterschnitt gebohrt in das hinterschnittenene Bohrloch ein spreizbarer Hinterschnittanker mit Innengewinde eingesetzt und dieser gespreizt und damit im Bohrloch verankert wird, **dadurch gekennzeichnet, dass** nach dem Bohrer ein Klebstoff in das Bohrloch eingefüllt wird, gefolgt vom Einsetzen des spreizbaren Hinterschnittankers, wonach eine unten geschlossene Hülse mit Innen- und Aussengewinde in den Anker eingedreht wird und dabei den Anker bleibend aufspreizt und den Klebstoff aushärtet.

2. Verfahren nach Anspruch 1, **dadurch gekennzeichnet, dass** die Hülse durch Eindrehen einer Befestigungsschraube in die Hülse in den Anker eingeschraubt wird.

3. Verwendung von nach dem Verfahren gemäss Anspruch 1 oder 2 hergestellten Verankerungen für die nicht sichtbare Befestigung von Plattenhaltern, insbesondere Einhängelaschen, auf der Rückseite von dünnwandigen Fassadenplatten, insbesondere solchen aus Faserzement.
